# EUROPÄISCHE PATENTSCHRIFT

(11) **EP 1 970 808 B1**
(45) Veröffentlichungstag und Bekanntmachung des Hinweises auf die Patenterteilung: **27.03.2019**
(21) Anmeldenummer: 08101735.2
(22) Anmeldetag: 19.02.2008
(51) Int. Cl.: G06F 11/32

(54) **Verfahren und Benutzerschnittstelle zur rechnergestützten Anzeige von Statusinformationen**
Method and user interface for displaying status information with computer support
Procédé et interface utilisateur destinés à l'affichage assisté par ordinateur d'informations d'état

(30) Priorität: 19.02.2007 DE 102007008203; 04.01.2008 DE 102008003171
(43) Veröffentlichungstag der Anmeldung: 17.09.2008
(73) Patentinhaber: Siemens Mobility GmbH, 81739 München (DE)
(72) Erfinder: Grabe, Adriane, 32545 Bad Oeynhausen (DE); Höller, Christine, 80469, München (DE); Kessner, Martin, 80796, München (DE); Beyer, Ralf, 91052, Erlangen (DE); Sept, Jürgen, 91126, Wolkersdorf (DE)

(56) Entgegenhaltungen:
- WO-A2-02/39280
- US-A1- 2007 268 300
- US-B1- 6 456 306
- Bob Atkins: "Canon i900D Photo Printer Review", , 1 January 2003 (2003-01-01), pages 1-11, XP55001948, photo.net Retrieved from the Internet: URL:http://photo.net/equipment/canon/i900d / [retrieved on 2011-07-04]
- Jeremy Zawodny: "About the new Yahoo! Mail (by Jeremy Zawodny)", , 22 September 2005 (2005-09-22), pages 1-86, XP055323151, Retrieved from the Internet: URL:http://jeremy.zawodny.com/blog/archive s/005401.html [retrieved on 2016-11-25]
- Jeremy Zawodny: "About the new Yahoo! Mail", , 22 September 2005 (2005-09-22), pages 1-1, XP055323152, Retrieved from the Internet: URL:http://jeremy.zawodny.com/i/candygram- search.png [retrieved on 2016-11-25]

## Beschreibung

Die Erfindung betrifft ein Verfahren und eine Benutzerschnittstelle zur rechnergestützten Anzeige von Statusinformationen. Eine Anzeige von Statusinformationen ist beispielsweise im Rahmen von Diagnose-Applikationen erforderlich. Die Diagnose-Applikation erlaubt einem Benutzer, sich über den Betriebsstatus eines komplexen technischen Systems, welches aus einer Anzahl technischer Teilsysteme besteht, zu informieren. Beispielsweise wird eine solche Diagnose-Applikation von einem Zugführer genutzt, welcher sich zeitweise über den Betriebsstatus eines von ihm geführten Schienenfahrzeugs informieren will. Ein anderes Szenario wäre eine Diagnose-Applikation für ein Kraftwerk, welches ebenfalls aus einer Anzahl technischer Teilsysteme besteht. Im Kontext der Diagnose-Applikation betreffen die Statusinformationen insbesondere Fehler und Störungen der jeweiligen technischen Teilsysteme.

Um einem Benutzer einen schnellen Überblick über die Statusinformationen anzuzeigen, werden üblicherweise auf einem Bildschirm Schaltknöpfe (Buttons) angezeigt, mit denen der Benutzer die einzelnen technischen Teilsysteme anwählen kann. Auf den Schaltknöpfen sind hierbei in der Regel grafische Symbole (Icons) als Beschriftung für das entsprechende technische Teilsystem platziert. Je nach Fehlerart werden diese Icons gelb oder rot eingefärbt, um die Statusinformation für das entsprechende technische Teilsystem zu visualisieren. Durch die Auswahl eines Schaltknopfs werden zusätzliche Informationen zu dem technischen Teilsystem und seinem Betriebsstatus eingeblendet.

Nachteilig wirkt sich hierbei aus, dass nicht zu jedem Zeitpunkt eine übersichtliche Darstellung aller Statusinformationen gewährleistet ist.

Die Druckschrift US 6 456 306 B1 zeigt ein Verfahren zur rechnergestützten Anzeige von Statusinformationen gemäß dem Oberbegriff des Anspruchs 1. Dabei werden die Statusinformationen von mehreren Netzwerkgeräten wiedergegeben.
Aus dem Dokument US 2007/268300 A1 ist eine graphische Darstellung bekannt, welche eine Planung und Konfiguration einer Anlage aus einer Anzahl von technischen Teilsystemen unterstützt. Die Teilsysteme werden hierzu in einem kolorierten Kreisdiagramm oder Blockdiagramm dargestellt.

Die Druckschrift WO 02/39280 A2 offenbart eine graphische Benutzeroberfläche, auf der Karteikarten angezeigt werden, wobei jede Karteikarte durch Anwahl eines Karteikartenreiters in den Vordergrund der Benutzeroberfläche gebracht werden kann.

In der Druckschrift Bob Atkins, "Canon i900D Photo Printer Review", 1. Januar 2003, S. 1-11, ist eine Benutzeroberfläche zur Anzeige von Statusinformationen eines Druckers gezeigt. Die Statusinformationen werden dabei auf unterschiedlichen Registerkarten zur Anzeige bereitgestellt.

Die Dokumente Jeremy Zawodny, "About the new Yahoo! Mail", 22. September 2005, S. 1-86, und Jeremy Zawodny, "About the new Yahoo! Mail", 22. September 2005, S. 1-1, zeigen das Browserfenster eines Mail-Providers. In dem Browserfenster können die Mails aus unterschiedlichen Ordnern über die Anwahl von Reitern entsprechender Registerkarten zur Anzeige gebracht werden.

Es stellt sich die Aufgabe, ein Verfahren und eine Benutzerschnittstelle zur rechnergestützten Anzeige von Statusinformationen anzugeben, mit welchem eine übersichtliche Darstellung der Statusinformationen der technischen Teilsysteme jederzeit gegeben ist.

Diese Aufgabe wird auf das Verfahren nach Anspruch 1 und die Benutzerschnittstelle nach Anspruch 11 gelöst. Bevorzugte Weiterbildungen ergeben sich aus den abhängigen Ansprüchen.

Bei dem Verfahren zur rechnergestützten Anzeige von Statusinformationen wird von einer Anzahl technischer Teilsysteme jeweils eine Statusinformation empfangen. Die Statusinformation umfasst gegebenenfalls einen oder mehrere Fehler, welche von dem jeweiligen technischen Teilsystem gemeldet werden. Für jedes technische Teilsystem wird eine Registerkarte zur Anzeige bereitgestellt, wobei ein auf einem Reiter der Registerkarte angeordnetes Gestaltungsmerkmal die Statusinformation des jeweiligen technischen Teilsystems repräsentiert und alle Reiter der Registerkarte sowie die auf den Reitern angeordneten Gestaltungsmerkmale gleichzeitig angezeigt werden.

Erfindungsgemäß wird mindestens ein Fehler, der noch nicht durch einen Benutzer quittiert wurde, durch das Gestaltungsmerkmal auf eine erste Art dargestellt. Der Fehler wird durch eine Interaktion des Benutzers angezeigt oder quittiert. Danach wird der Fehler durch das Gestaltungsmerkmal auf eine zweite Art dargestellt.

Die Benutzerschnittstelle zur rechnergestützten Anzeige von Statusinformationen weist Empfangsmittel auf, welche zum Empfang von Statusinformationen von einer Anzahl technischer Teilsysteme ausgelegt sind, wobei die Statusinformation gegebenenfalls einen oder mehrere Fehler umfasst, welche von dem jeweiligen technischen System gemeldet werden. Weiterhin weist die Benutzerschnittstelle visuelle Ausgabemittel auf, welche zur Anzeige einer Registerkarte für jedes technische Teilsystem ausgelegt sind, wobei ein auf einem Reiter der Registerkarte angeordnetes Gestaltungsmerkmal die Statusinformation des jeweiligen technischen Teilsystems repräsentiert und alle Reiter der Registerkarte sowie die auf den Reitern angeordneten Gestaltungsmerkmale gleichzeitig anzeigbar sind.

Das visuelle Ausgabemittel der erfindungsgemäßen Benutzerschnittstelle ist derart ausgestaltet, dass mindestens ein Fehler, der noch nicht durch einen Benutzer quittiert wurde, durch das Gestaltungsmerkmal auf eine erste Art dargestellt wird, wobei der Fehler durch eine Interaktion des Benutzers angezeigt und quittiert wird und der Fehler nach der Interaktion des Benutzers durch das Gestaltungsmerkmal auf eine zweite Art dargestellt wird.

Das Verfahren und die Benutzerschnittstelle haben den Vorteil, dass die Statusinformationen der Teilsysteme immer sichtbar bleiben, da sie auf den Reitern der Registerkarten angeordnet sind. Durch die Darstellung der Statusinformationen auf den Reitern erhält ein Benutzer eine Vorschau auf den kumulierten Status aller technischen Teilsysteme, auch ohne eine bestimmte Registerkarte auszuwählen. Somit hat er einen schnellen Überblick und sieht zu jeder Zeit auch den Status der technischen Teilsysteme, deren Registerkarten nicht ausgewählt sind. Der Benutzer wird dadurch optimal durch die jeweilige Anwendung geführt, ohne den Überblick über das Gesamtsystem zu verlieren.

Informationen, welche spezifisch für das jeweilige technische Teilsystem sind, lassen sich auf der jeweiligen Registerkarte anzeigen. Auf diese Weise werden die systemspezifischen Inhalte für die technischen Teilsysteme klar von den allgemeinen, immer sichtbaren Inhalten auf der Benutzeroberfläche getrennt.

Gemäß einer Weiterbildung ist das Gestaltungsmerkmal eine farbige Fläche, wobei die Farbe der Fläche die Statusinformationen des jeweiligen technischen Teilsystems repräsentiert.

Diese Weiterbildung hat den Vorteil, dass eine Beschriftung auf dem jeweiligen Reiter, welche das zugeordnete technische Teilsystem referenziert, von dem Gestaltungsmerkmal räumlich getrennt auf dem Reiter angeordnet werden kann. Hierdurch wird die Komplexität der Darstellung gering gehalten.

In einer zweiten Weiterbildung ist die farbige Fläche als Streifen am oberen Rand des Reiters ausgebildet. Dies bietet den Vorteil, dass die Statusinformationen für alle technischen Teilsysteme prägnant und eindeutig nebeneinander an den oberen Rändern der Reiter dargestellt werden.

Das Gestaltungsmerkmal stellt gemäß einer Ausführungsform mehrere Fehler gleichzeitig dar. Gegebenenfalls wird hierbei für jeden Fehler eine zugehörige Fehlerkategorie dargestellt.

In einer Variante wird die Anzahl der Fehler in einer Fehlerkategorie durch mindestens eine Ziffer in dem Gestaltungsmerkmal dargestellt.

Die erste Art der Darstellung ist beispielsweise eine blinkende Darstellung.

Nachdem der Benutzer durch die blinkende Darstellung auf den Fehler aufmerksam geworden ist, kann er beispielsweise den Reiter der jeweiligen Registerkarte anwählen, um diese in den Vordergrund zu bringen. Nun werden in der Registerkarte Details zu dem Fehler an den Benutzer ausgegeben. Optional kann der Benutzer den Erhalt der Information zusätzlich durch eine Interaktion quittieren. Im Anschluss wird der Fehler durch das Gestaltungsmerkmal nicht mehr blinkend dargestellt.

Das Gestaltungsmerkmal stellt die Fehler bzw. Fehlerkategorien in einer Weiterbildung durch Zusatzinformationen oder Bildzeichen dar.

Das Verfahren sowie die Weiterbildungen können durch ein Computerprogramm ausgeführt werden, welches in einem Prozessor abgearbeitet wird.

Weiterhin kann das Computerprogramm auf einem computerlesbaren Datenträger gespeichert sein.

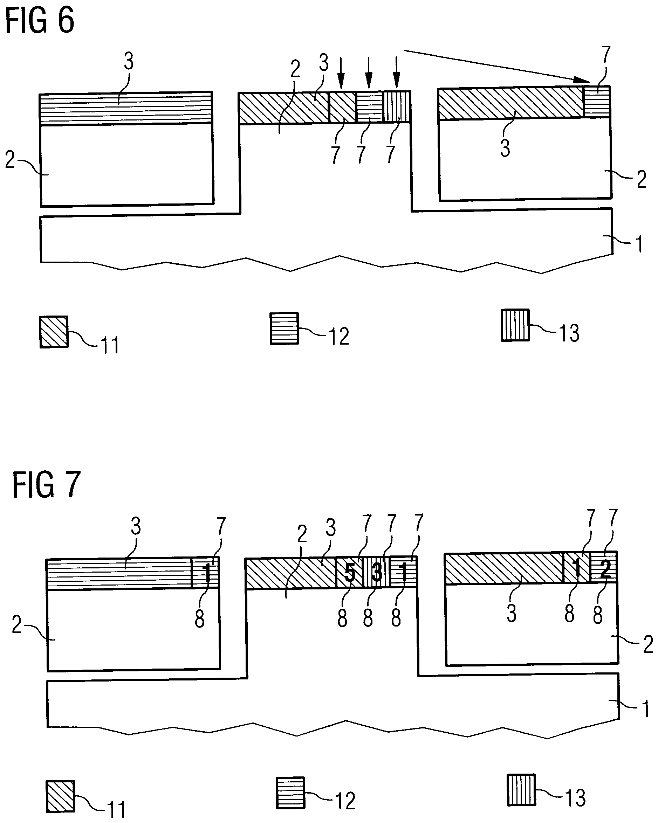

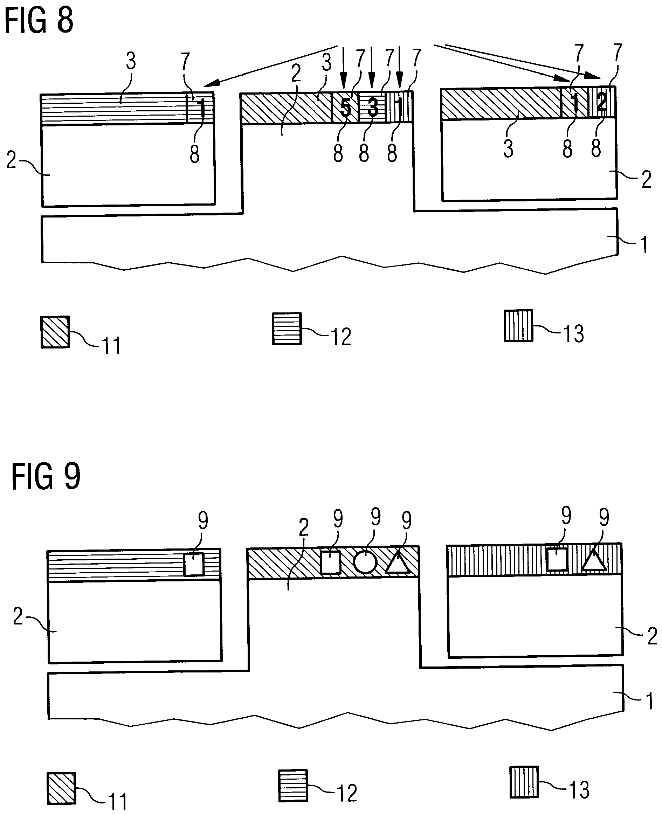

Im Folgenden werden Ausführungsbeispiele näher erläutert, die in der Zeichnung schematisch dargestellt sind. Figuren 6 und 8 betreffend dabei Ausführungsformen, welche die Darstellung von quittierten und unquittierten Fehlern gemäß der Erfindung zeigen.

Es zeigt:
- Figur 1: eine Benutzerschnittstelle zur rechnergestützten Anzeige von Statusinformationen,
- Figur 2: eine Benutzerschnittstelle zur rechnergestützten Anzeige von Statusinformationen für ein Schienenfahrzeug in einer ersten Variante,
- Figur 3: eine Benutzerschnittstelle zur rechnergestützten Anzeige von Statusinformationen für ein Schienenfahrzeug gemäß einer zweiten Variante,
- Figur 4: eine Benutzerschnittstelle zur rechnergestützten Anzeige von Statusinformationen in abstrahierter Form,
- Figur 5: eine Benutzerschnittstelle zur rechnergestützten Anzeige von Statusinformationen, welche mehrere Fehlerkategorien beinhalten,
- Figur 6: eine Benutzerschnittstelle zur rechnergestützten Anzeige von Statusinformationen mit Unterscheidung quittierter und unquittierter Fehler,
- Figur 7: eine Benutzerschnittstelle zur rechnergestützten Anzeige von Statusinformationen, wobei jeweils eine Anzahl von Fehlern für jede Fehlerkategorie ausgegeben wird,
- Figur 8: eine Benutzerschnittstelle zur rechnergestützten Anzeige von Statusinformationen mit Unterscheidung quittierter und unquittierter Fehler, wobei jeweils eine Anzahl von Fehlern für jede Fehlerkategorie ausgegeben wird,
- Figur 9: eine Benutzerschnittstelle zur rechnergestützten Anzeige von Statusinformationen mit zusätzlicher Ausgabe von Bildzeichen.

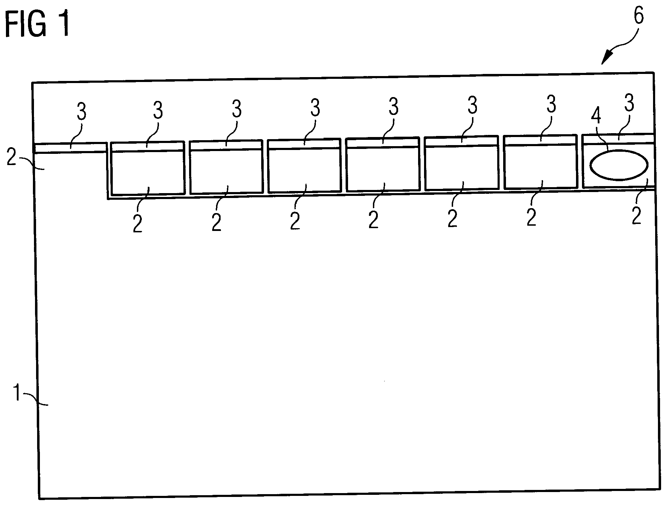

Figur 1 zeigt eine Benutzerschnittstelle zur rechnergestützten Anzeige von Statusinformationen. Gezeigt ist eine Darstellung 6 mit einer Registerkarte 1, welche im Vordergrund sichtbar ist. Die Registerkarte 1 weist einen Reiter 2 auf, durch welchen sie nach oben erweitert ist und durch Selektion des Reiters 2 mit einem Eingabemittel in den Vordergrund gebracht werden kann, wenn die Registerkarte 1 von anderen Registerkarten verdeckt wird. Figur 1 zeigt weitere Reiter 2, welche im Hintergrund der Registerkarte 1 angeordnet sind und weitere Registerkarten zur Anwahl bereitstellen.

Jede Registerkarte ist einem technischen Teilsystem zugeordnet und stellt für dieses technische Teilsystem spezifische Informationen dar. Auf dem Reiter 2 der Registerkarte 1 ist ein Gestaltungsmerkmal 3 angeordnet, welches eine Statusinformation repräsentiert, die von dem jeweiligen technischen Teilsystem empfangen wurde. Gleiches gilt für die Gestaltungsmerkmale 3 auf den Reitern 2 der übrigen Registerkarten. Auf der verbleibenden Fläche des Reiters 2 kann jeweils eine Kennzeichnung 4 angebracht werden, welche das der jeweiligen Registerkarte zugeordnete technische Teilsystem kennzeichnet. Als Kennzeichnung 4 kommen beispielsweise Text oder ein grafisches Symbol in Frage.

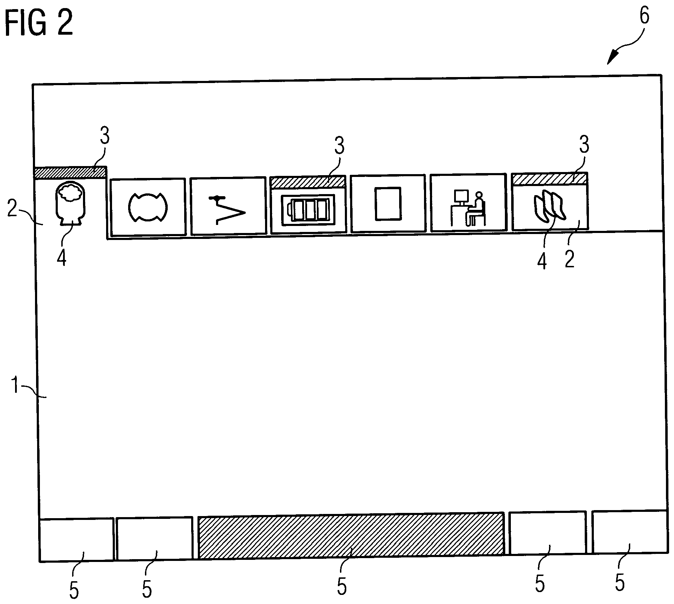

Figur 2 zeigt ein zweites Ausführungsbeispiel, welches auf ein Schienenfahrzeug zugeschnitten ist. Wie in Figur 1 sind Registerkarte 1, Reiter 2, Gestaltungsmerkmale 3 und Kennzeichnungen 4 sichtbar. Zusätzlich umfasst die Darstellung 6 auch feste Elemente 5, welche im Kontext der jeweiligen Applikation immer sichtbar sein sollen. Hierbei kann es sich beispielsweise um Datums- oder Zeitangaben, Service- oder Informationsmenüs handeln. Ähnlich wie bei Figur 1 ist in Figur 2 das Gestaltungsmerkmal 3 als eine Fläche bzw. als Streifen am oberen Rand der Reiter 2 angeordnet. Die unterschiedliche Schraffur der Gestaltungsmerkmale 3 in Figur 2 deutet hierbei unterschiedliche Farben an, die jeweils die Statusinformation des jeweiligen technischen Teilsystems repräsentieren. Die Farben können beispielsweise als Fehlerfarben gewählt werden, wobei die Farbe gelb einen leichten und die Farbe rot einen schweren Fehler repräsentiert. Als Kennzeichnung 4 ist auf den Reitern 2 jeweils ein Icon zu sehen, welches bestimmte technische Teilsysteme im Schienenfahrzeug referenziert. Dies können beispielsweise Zugkraft/Bremskraft, Antrieb und Energieversorgung, Batterieladung, Funktion der Türen, Klimaanlage, und weitere technische Teilsysteme sein. Die Darstellung 6 kann im Rahmen einer Diagnose-Applikation zum Einsatz kommen. So kann die in Figur 2 gezeigte Darstellung 6 etwa auf einem mobilen Endgerät eines Servicetechnikers ausgegeben werden. Alternativ kann die Darstellung 6 auf einem Bildschirm im Zugcockpit für einen Zugführer zur Verfügung gestellt werden. Die jeweilige Benutzerschnittstelle ermöglicht dem Zugführer oder Servicetechniker beispielsweise über Folientasten oder Touchscreen eine Bedienung, wobei insbesondere die Anwahl eines Reiters die jeweilige Registerkarte in den Vordergrund der Darstellung 6 bringt. Die Darstellung 6 umfasst somit alle wichtigen technischen Teilsysteme des Schienenfahrzeugs. Fehlerquellen, beispielsweise Störungen der Bremsen, der Türen, der Energieversorgung oder der Klimaanlage, werden durch die Gestaltungsmerkmale 3 zu jedem Zeitpunkt deutlich und übersichtlich an den jeweiligen Benutzer im Rahmen der Darstellung 6 ausgegeben. Auf den einzelnen Registerkarten kann der Benutzer die Details einsehen, die zu der jeweiligen Statusinformation geführt haben, welche durch das Gestaltungsmerkmal 3 auf dem Reiter 2 der jeweiligen Registerkarte angezeigt wird. So kann der Benutzer beispielsweise nachschlagen, welche Tür im Schienenfahrzeug defekt ist. Gegebenenfalls kann die Benutzerschnittstelle dem Benutzer hierbei auch die Einleitung entsprechender Maßnahmen erlauben, etwa die defekte Tür zu sperren.

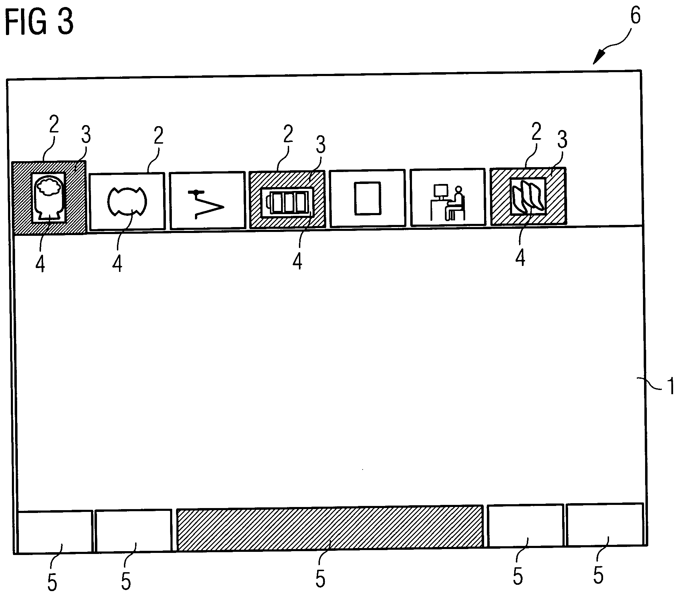

Figur 3 zeigt ein weiteres Ausführungsbeispiel, welches ebenfalls im Kontext eines Schienenfahrzeugs zum Einsatz kommt. Es sind jedoch auch andere komplexe technische Systeme als Kontext denkbar, wie etwa ein Kraftwerk, ein Kraftfahrzeug etc. Gemäß Figur 3 ist das Gestaltungsmerkmal 3 als Fläche ausgebildet, welche die gesamte Fläche des jeweiligen Reiters 2 ausfüllt. Lediglich die Kennzeichnung 4 wird überlappend auf dem Gestaltungsmerkmal 3 dargestellt. Die gezeigten Gestaltungsmerkmale 3 sind erneut durch unterschiedlich starke Schraffur dargestellt, wobei auch hier anstelle der Schraffur geeignete Signalfarben gewählt werden können. Alternativ kann auch die Darstellung der Kennzeichnung 4 beispielsweise durch farbliche Veränderung so manipuliert werden, dass die Kennzeichnung 4 die Funktion des Gestaltungsmerkmals 3 übernimmt. Die räumliche Trennung von Kennzeichnung 4 und Gestaltungsmerkmal 3 bietet jedoch den Vorteil, dass die Komplexität der Darstellung gering gehalten wird und die Statusinformationen sehr prägnant dargestellt werden. Das Gestaltungsmerkmal 3 kann auch durch Symbole wie ein Ausrufezeichen oder einen Blitz implementiert werden.

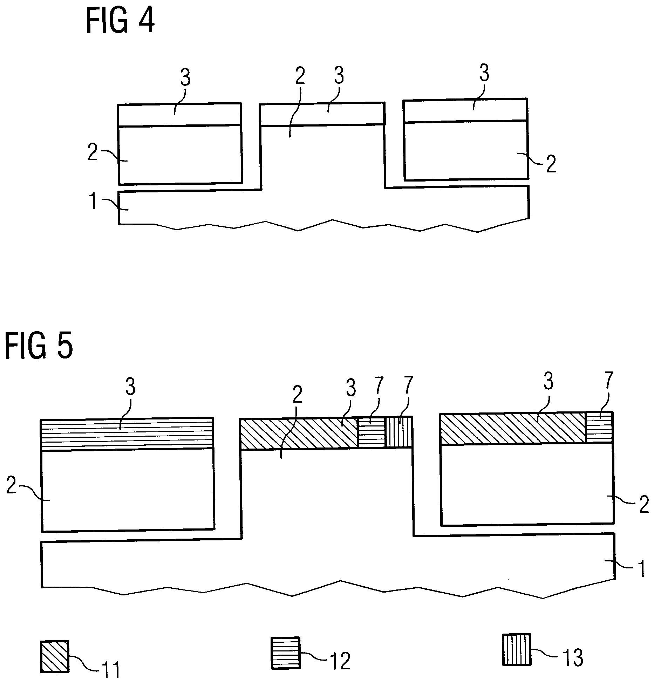

Die Figuren 4 bis 9 zeigen eine mittlere Registerkarte 1 (im Vordergrund) mit einem Reiter 2 und einem Gestaltungsmerkmal 3, sowie zwei Registerkarten links und rechts im Hintergrund mit jeweils einem Reiter 2 und einem Gestaltungsmerkmal 3. Auf der verbleibenden Fläche der Reiter 2 kann jeweils eine Kennzeichnung angebracht werden, welche das der jeweiligen Registerkarte zugeordnete technische Teilsystem kennzeichnet. Als Kennzeichnung kommen beispielsweise Text oder ein grafisches Symbol bzw. Bildzeichen (Icon) in Frage.

Figur 4 zeigt dabei ein Szenario wie in den Figuren 1 bis 3. Meldet das technische Teilsystem, das der Registerkarte 1 zugeordnet ist, als Statusinformation einen Fehler, so visualisiert das Gestaltungsmerkmal 3 der Registerkarte 1 dessen Fehlerkategorie beispielsweise durch eine Fehlerfarbe (in der Regel entsprechend dem gravierendsten in dem der betroffenen Registerkarte 1 zugeordneten technischen Teilsystem anstehenden Fehler). Neu hinzugekommene Fehler laufen Gefahr, von einem Benutzer unbemerkt zu bleiben, wenn bereits Fehler aus der gleichen oder einer höheren Fehlerkategorie anstehen, wie an einem Beispiel aufgezeigt werden soll:
Es steht ein Fehler in einem technischen Teilsystem an. Dieser wird durch das Gestaltungsmerkmal 3 dargestellt. Der Benutzer hat den Fehler bereits zur Kenntnis genommen und quittiert und wendet sich wieder anderen technischen Teilsystemen zu, navigiert also auf eine andere Registerkarte. Der Fehler steht aber weiterhin an. Nun tritt ein neuer Fehler im selben technischen Teilsystem ein. Da das Gestaltungsmerkmal 3 bereits einen Fehler anzeigt, ergibt sich aus dieser grundlegend neuen Situation keine andere Darstellung. Der Benutzer läuft also Gefahr, den Fehler zu übersehen bzw. muss nach ihm suchen. Die benutzerführende Funktion des Gestaltungsmerkmals 3 geht in solchen Fällen verloren.

Figur 5 zeigt eine Weiterentwicklung gegenüber Figur 4. Das Gestaltungsmerkmal 3 weist nun ggf. Zusatzinformationen 7 auf. Zusätzlich zu dem in Figur 4 gezeigten Streifen bzw. Balken, der als Gestaltungsmerkmal 3 die Fehlerkategorie des höchsten anstehenden Fehlers angezeigt, werden durch die Zusatzinformationen 7 im Gestaltungsmerkmal 3 auf den Reitern 2 weitere fehlerbezogene oder sonstige Informationen ausgegeben.

So wird hier mittels der Zusatzinformationen 7 dargestellt, dass Fehler aus verschiedenen Fehlerkategorien anstehen, und um welche Fehlerkategorien es sich dabei handelt. Dies kann durch Farbflächen und/oder Bildzeichen (Icons) geschehen.

Die Figuren 5 bis 9 zeigen jeweils eine Legende mit einer ersten Fehlerfarbe 11, die einer ersten Fehlerkategorie zugeordnet ist, einer zweiten Fehlerfarbe 12, die einer zweiten Fehlerkategorie zugeordnet ist, und einer dritten Fehlerfarbe 13, die einer dritten Fehlerkategorie zugeordnet ist. Natürlich kann jeweils eine beliebige Anzahl von Fehlerkategorien und Registerkarten angezeigt werden. Die Fehlerfarben sind in den Figuren durch unterschiedliche Schraffuren angedeutet.

Bei dem in Figur 5 gezeigten Beispiel steht in der linken Registerkarte mindestens ein Fehler der zweiten Fehlerkategorie an. In der mittleren Registerkarte 1 stehen Fehler aus der ersten Fehlerkategorie, der zweiten Fehlerkategorie und der dritten Fehlerkategorie an. In der rechten Registerkarte stehen Fehler aus der ersten Fehlerkategorie und der dritten Fehlerkategorie an.

Figur 6 entspricht weitgehend dem in Figur 5 gezeigten Fall. Die Pfeile zeigen jedoch an, dass die jeweiligen Zusatzinformationen 7 blinkend dargestellt sind. Hierdurch wird visualisiert, dass unquittierte Fehler anstehen, und zu welchen Fehlerkategorien diese unquittierten Fehler gehören. Dies kann durch blinkende Farbflächen und/oder Bildzeichen (Icons) geschehen.

In dem in Figur 6 gezeigten Fall steht in der linken Registerkarte mindestens ein quittierter Fehler der zweiten Fehlerkategorie an (quittiert, da keine blinkende Zusatzinformation 7 angezeigt wird). In der mittleren Registerkarte 1 stehen unquittierte Fehler aus allen drei Fehlerkategorien an (blinkende Zusatzinformationen 7 für alle drei Fehlerkategorien). In der rechten Registerkarte stehen mindestens ein quittierter Fehler aus der ersten Fehlerkategorie und mindestens ein unquittierter Fehler aus der dritten Fehlerkategorie an.

Figur 7 zeigt eine andere Erweiterung des in Figur 5 gezeigten Falls. Hier wird zusätzlich angezeigt, wie viele Fehler in den jeweiligen Fehlerkategorien anstehen. Dies kann, wie in Figur 7 gezeigt, als numerische Anzeige der jeweiligen Fehleranzahl durch Ziffern 8 innerhalb der Zusatzinformationen 7 erfolgen, die die jeweilige Fehlerkategorie repräsentieren.

Im in Figur 7 gezeigten Beispiel steht in der linken Registerkarte genau ein Fehler der zweiten Fehlerkategorie an. In der mittleren Registerkarte 1 stehen fünf Fehler aus der ersten Fehlerkategorie, drei aus der zweiten Fehlerkategorie und genau ein Fehler aus der dritten Fehlerkategorie an. In der rechten Registerkarte stehen genau ein Fehler aus der ersten Fehlerkategorie und zwei Fehler aus der dritten Fehlerkategorie an.

Figur 8 zeigt eine Synthese der Szenarien aus Figur 6 und 7. Es wird mittels Ziffern 8 angezeigt, wie viele unquittierte Fehler in den jeweiligen Fehlerkategorien anstehen. Die Pfeile zeigen zur Veranschaulichung auf blinkende Ziffern 8 oder Zusatzinformationen 7, wobei letztere beispielsweise als blinkende Farbflächen ausgestaltet sind und Fehlerkategorien repräsentieren, die unquittierte Fehler enthalten.

Im in Figur 8 gezeigten Beispiel steht in der linken Registerkarte genau ein unquittierter Fehler der zweiten Fehlerkategorie an. In der mittleren Registerkarte 1 stehen unquittierte Fehler aus allen drei Fehlerkategorien an (blinkende Zusatzinformationen 7 für alle drei Fehlerkategorien): fünf Fehler aus der ersten Fehlerkategorie, drei aus der zweiten Fehlerkategorie und genau ein Fehler aus der dritten Fehlerkategorie. In der rechten Registerkarte stehen genau ein unquittierter Fehler aus der ersten Fehlerkategorie und zwei unquittierte Fehler aus der dritten Fehlerkategorie an.

Zusätzlich oder alternativ zu den oben genannten Darstellungsformen können durch Anzeige von ein- oder mehrfarbigen Bildzeichen 9 auf dem Gestaltungsmerkmal 3 weitere Fehlerzustände oder andere Bestandteile der Statusinformation dargestellt werden. Dies ist in Figur 9 gezeigt. Die geometrischen Formen der Bildzeichen sind in der Figur stellvertretend zu sehen. Beispielsweise könnte auf dem Reiter einer Registerkarte, die einer Stromversorgung zugeordnet ist, ein aussagekräftiges Bildzeichen angezeigt werden, wenn eine Batterie geladen wird. Das ist ein Beispiel für einen Bestandteil der Statusinformation, der nicht als Fehler zu werten ist.

Mit der vorgestellten Lösung können komplexe Statusinformationen bzw. Fehlerzustände verschiedener technischer Teilsysteme platzsparend gleichzeitig angezeigt werden. Fehler aus unterschiedlichen Fehlerkategorien werden gleichzeitig dargestellt. Quittierte Fehler können von nicht quittierten Fehlern unterschieden werden. So bleibt die benutzerführende Funktion der Benutzeroberfläche erhalten. Der Benutzer muss weniger oder überhaupt nicht navigieren, um ein vollständiges und detailreiches Bild der Situation zu erhalten.

Der Empfang der Statusinformationen und etwaiger Benutzereingaben sowie die visuelle Ausgabe der Darstellung 6 wird von einer oder mehreren Recheneinheiten vorgenommen und gesteuert, welche etwa in einem Zugcockpit, in einem mobilen Endgerät wie einem PDA oder auf einem Server platziert sein können.

Die genannten Ausführungsbeispiele können frei miteinander kombiniert und im Kontext beliebiger technischer Szenarien eingesetzt werden.

## Patentansprüche

1. Verfahren zur rechnergestützten Anzeige von Statusinformationen,
- bei dem von einer Mehrzahl technischer Teilsysteme jeweils eine Statusinformation empfangen wird, wobei die Statusinformation gegebenenfalls einen oder mehrere Fehler umfasst, welche von dem jeweiligen technischen Teilsystem gemeldet werden,
**dadurch gekennzeichnet, dass**
- für jedes technische Teilsystem eine Registerkarte (1) zur Anzeige bereitgestellt wird und ein auf einem Reiter (2) der Registerkarte (1) angeordnetes Gestaltungsmerkmal (3) die Statusinformation des jeweiligen technischen Teilsystems repräsentiert,
- alle Reiter (2) der Registerkarten (1) sowie die auf den Reitern (2) angeordneten Gestaltungsmerkmale (3) gleichzeitig angezeigt werden,
- mindestens ein Fehler, der noch nicht durch einen Benutzer quittiert wurde, durch das Gestaltungsmerkmal (3) auf eine erste Art dargestellt wird,
- der Fehler durch eine Interaktion des Benutzers angezeigt oder quittiert wird,
- der Fehler nach der Interaktion des Benutzers durch das Gestaltungsmerkmal (3) auf eine zweite Art dargestellt wird.

2. Verfahren nach Anspruch 1,
bei dem das Gestaltungsmerkmal (3) eine farbige Fläche ist und die Farbe der Fläche die Statusinformation des jeweiligen technischen Teilsystems repräsentiert.

3. Verfahren nach Anspruch 2,
bei dem die farbige Fläche als Streifen am oberen Rand des Reiters (2) ausgebildet ist.

4. Verfahren nach einem der vorhergehenden Ansprüche,
bei dem das Gestaltungsmerkmal (3) mehrere Fehler gleichzeitig darstellt.

5. Verfahren nach Anspruch 4,
bei dem das Gestaltungsmerkmal (3) für jeden Fehler eine zugehörige Fehlerkategorie darstellt.

6. Verfahren nach Anspruch 5,
bei dem die Anzahl der Fehler in einer Fehlerkategorie durch mindestens eine Ziffer (8) in dem Gestaltungsmerkmal (3) dargestellt wird.

7. Verfahren nach einem der vorhergehenden Ansprüche,
bei dem die erste Art der Darstellung eine blinkende Darstellung ist.

8. Verfahren nach Anspruch 5,
bei dem das Gestaltungsmerkmal (3) die Fehler bzw. Fehlerkategorien durch Zusatzinformationen (7) oder Bildzeichen (9) darstellt.

9. Computerprogramm,
welches in einem Prozessor abgearbeitet wird und dabei das Verfahren nach einem der vorangegangenen Ansprüche ausführt.

10. Computerlesbarer Datenträger,
auf dem ein Computerprogramm gespeichert ist, welches das Verfahren nach Anspruch 1 bis 8 ausführt, wenn es in einem Prozessor abgearbeitet wird.

11. Benutzerschnittstelle zur rechnergestützten Anzeige von Statusinformationen,
- mit Empfangsmitteln zum Empfang von Statusinformationen von einer Mehrzahl technischer Teilsysteme, wobei die Statusinformation gegebenenfalls einen oder mehrere Fehler umfasst, welche von dem jeweiligen technischen Teilsystem gemeldet werden,
**gekennzeichnet durch**
- ein visuelles Ausgabemittel zur Anzeige einer Registerkarte (1) für jedes technische Teilsystem, wobei ein auf einem Reiter (2) der Registerkarte (1) angeordnetes Gestaltungsmerkmal (3) die Statusinformation des jeweiligen technischen Teilsystems repräsentiert, und wobei alle Reiter (2) der Registerkarten (1) sowie die auf den Reitern (2) angeordneten Gestaltungsmerkmale (3) gleichzeitig anzeigbar sind,
- wobei das visuelle Ausgabemittel derart ausgestaltet ist, dass mindestens ein Fehler, der noch nicht durch einen Benutzer quittiert wurde, durch das Gestaltungsmerkmal (3) auf eine erste Art dargestellt wird, der Fehler durch eine Interaktion des Benutzers angezeigt oder quittiert wird, der Fehler nach der Interaktion des Benutzers durch das Gestaltungsmerkmal (3) auf eine zweite Art dargestellt wird.

## Claims

1. Method for the computer-aided display of status information,
- in which an item of status information is respectively received from a plurality of technical subsystems, wherein the status information possibly comprises one or more faults which are reported by the respective technical subsystem,
**characterized in that**
- an index card (1) for display is provided for each technical subsystem and a design feature (3) arranged on a tab (2) of the index card (1) represents the status information relating to the respective technical subsystem,
- all tabs (2) of the index cards (1) and the design features (3) arranged on the tabs (2) are displayed at the same time,
- at least one fault which has not yet been acknowledged by a user is represented by the design feature (3) in a first manner,
- the fault is displayed or acknowledged as a result of interaction of the user,
- the fault is represented by the design feature (3) in a second manner after the interaction of the user.

2. Method according to Claim 1,
in which the design feature (3) is a coloured area and the colour of the area represents the status information relating to the respective technical subsystem.

3. Method according to Claim 2,
in which the coloured area is in the form of a strip on the upper edge of the tab (2).

4. Method according to one of the preceding claims,
in which the design feature (3) simultaneously represents a plurality of faults.

5. Method according to Claim 4,
in which the design feature (3) represents an associated fault category for each fault.

6. Method according to Claim 5,
in which the number of faults in a fault category is represented by at least one digit (8) in the design feature (3) .

7. Method according to one of the preceding claims,
in which the first manner of representation is a flashing representation.

8. Method according to Claim 5,
in which the design feature (3) represents the faults or fault categories by means of additional information (7) or icons (9) .

9. Computer program
which is executed in a processor and in the process carries out the method according to one of the preceding claims.

10. Computer-readable data storage medium,
which stores a computer program which carries out the method according to Claims 1 to 8 when it is executed in a processor.

11. User interface for the computer-aided display of status information,
- having receiving means for receiving status information from a plurality of technical subsystems, wherein the status information possibly comprises one or more faults which are reported by the respective technical subsystem,
**characterized by**
- a visual output means for displaying an index card (1) for each technical subsystem, wherein a design feature (3) arranged on a tab (2) of the index card (1) represents the status information relating to the respective technical subsystem, and wherein all tabs (2) of the index cards (1) and the design features (3) arranged on the tabs (2) can be displayed at the same time,
- wherein the visual output means is configured in such a manner that at least one fault which has not yet been acknowledged by a user is represented by the design feature (3) in a first manner, the fault is displayed or acknowledged as a result of interaction of the user, and the fault is represented by the design feature (3) in a second manner after the interaction of the user.

## Revendications

1. Procédé destiné à l'affichage assisté par ordinateur d'informations d'état,
- dans lequel une information d'état respective est reçue d'une pluralité de systèmes techniques partiels, dans lequel l'information de statut comprend le cas échéant une ou plusieurs erreur(s) qui peu(ven)t être signalée(s) par le système technique partiel respectif,
**caractérisé en ce que**
- une carte de registre (1) pour l'affichage est fournie pour chaque système technique partiel et un attribut de représentation (3) disposé sur un onglet (2) de la carte de registre (1) représente l'information de statut du système technique partiel respectif,
- tous les onglets (2) des cartes de registre (1) ainsi que les attributs de représentation (3) disposés sur les onglets (2) sont affichés en même temps,
- au moins une erreur qui n'a pas encore été quittancée par un utilisateur, est représentée d'une première manière par l'attribut de représentation (3),
- l'erreur est affichée ou quittancée par une interaction de l'utilisateur,
- l'erreur est représentée d'une deuxième manière par l'attribut de représentation (3) après l'interaction de l'utilisateur.

2. Procédé selon la revendication 1, dans lequel l'attribut de représentation (3) est une surface colorée et la couleur de la surface représente l'information de statut du système technique partiel respectif.

3. Procédé selon la revendication 2, dans lequel la surface colorée est conçue en tant que bande sur le bord supérieur de l'onglet (2).

4. Procédé selon l'une des revendications précédentes, dans lequel l'attribut de représentation (3) représente plusieurs erreurs en même temps.

5. Procédé selon la revendication 4, dans lequel l'attribut de représentation (3) représente une catégorie d'erreur correspondante pour chaque erreur.

6. Procédé selon la revendication 5, dans lequel le nombre des erreurs dans une catégorie d'erreurs est représenté par au moins un chiffre (8) dans l'attribut de représentation (3).

7. Procédé selon l'une des revendications précédentes, dans lequel la première manière d'affichage est un affichage clignotant.

8. Procédé selon la revendication 5, dans lequel l'attribut de représentation (3) affiche les erreurs, respectivement les catégories d'erreurs, par des informations supplémentaires (7) ou des signes visuels (9).

9. Programme informatique qui peut être exécuté dans un processeur et exécute en cela le procédé selon l'une des revendications précédentes.

10. Support de données lisible sur ordinateur, sur lequel un programme informatique est enregistré, lequel exécute le procédé selon la revendication 1 à 8 lorsqu'il est exécuté dans un processeur.

11. Interface utilisateur pour l'affichage assisté par ordinateur d'informations d'état,
- avec des moyens de réception pour recevoir des informations d'état d'une pluralité de systèmes techniques partiels, dans lequel l'information de statut comprend le cas échéant une ou plusieurs erreur(s) qui peu(ven)t être signalée(s) par le système technique partiel respectif,
**caractérisé par**
- un moyen d'émission visuel pour afficher une carte de registre (1) pour chaque système technique partiel, dans lequel un attribut de représentation (3) disposé sur un onglet (2) de la carte de registre (1) représente l'information de statut du système technique partiel respectif, et dans lequel tous les onglets (2) des cartes de registre (1) ainsi que les attributs de représentation (3) disposés sur les onglets (2) peuvent être affichés en même temps,
- dans lequel le moyen d'émission visuel est ainsi conçu qu'au moins une erreur qui n'a pas encore été quittancée par un utilisateur, est représentée d'une première manière par l'attribut de représentation (3), l'erreur est affichée ou quittancée par une interaction de l'utilisateur, l'erreur est représentée d'une deuxième manière par l'attribut de représentation (3) après l'interaction de l'utilisateur.
